# FASCICULE DE BREVET EUROPEEN

(11) **EP 2 239 690 B1**
(45) Date de publication et mention de la délivrance du brevet: **26.10.2011**
(21) Numéro de dépôt: 09005232.5
(22) Date de dépôt: 09.04.2009
(51) Int. Cl.: G06K 19/073

(54) **Carte du type bancaire avec un interrupteur actionnable par un utilisateur**
Karte vom Typ Bankkarte mit einem durch den Benutzer aktivierbaren Schalter
Card such as a bank card with a switch that can be activated by a user

(43) Date de publication de la demande: 13.10.2010
(73) Titulaire: NagraID Security SA, 2322 Le Crêt-du-Locle (CH)
(72) Inventeur: Guillaud, Philippe, Los Angeles, CA 90064 (US); Lalo, Cyril, Los Angeles, CA 90065 (US); Droz, François, 2035 Corcelles (CH)
(74) Mandataire: Surmely, Gérard

(56) Documents cités:
- US-A- 5 627 355
- US-A1- 2006 266 831

## Description

On connaît des cartes du type bancaire avec un interrupteur pouvant avoir, dans un cas général, une fonction d'activation du circuit de la carte et/ou d'un affichage digital de cette carte ou, dans un cas particulier, une fonction de lancement d'un programme donné implémenté dans la carte, notamment une procédure d'identification sécurisée. On remarquera que dans plusieurs applications, le cas général et le cas particulier peuvent être combinés, l'activation de l'alimentation du circuit électronique incorporé dans une carte engendrant automatiquement le lancement d'un algorithme d'identification sécurisé en vue d'effectuer une certaine transaction, notamment du type bancaire.

On connaît en particulier du document US 5,627,355 carte comprenant un interrupteur actionnable par une sorte de bouton-poussoir ou une zone déformable de la carte permettant par l'exercice d'une pression dans la zone de la carte contenant l'interrupteur de lancer un algorithme spécifique d'identification sécurisée. Cette carte comprend en outre au moins un affichage digital prévu pour afficher successivement différents nombres d'identification personnels aussi nommés 'codes PIN'. Cette carte comprend également une unité électronique et une source d'alimentation électrique associée à une cellule solaire agencée à la surface de la carte. Ce type de carte peut être utilisé dans divers services, que ce soit pour faire des appels téléphoniques depuis des appareils téléphoniques publics, un service de téléchargement de films sur Internet, accéder à son compte bancaire ou postal notamment en vue d'effectuer diverses transactions, comme le paiement de factures.

Le programme d'identification prévu dans le document US 5,627,355 consiste à mémoriser dans la carte une liste de codes PIN générée de manière unique pour un client donné, cette même liste étant enregistrée dans le serveur de l'établissement bancaire. A chaque activation de la carte via l'interrupteur, un nouveau code personnel est sélectionné dans la liste et affiché. Cette sélection consiste généralement à prendre le code non utilisé suivant dans la liste préétablie. L'utilisateur doit entrer ce code dans l'appareil ou l'ordinateur qui le transmet au serveur. Ce serveur vérifie que ce code est bien le code non utilisé suivant dans la liste du client en question. On parte ici de mot de passe utilisé une seule fois ou à usage unique (OTP, de l'anglais 'One Time Password'). On comprend donc l'importance de maintenir une synchronisation entre la position dans la liste de la carte et la position dans liste du serveur. Si des codes de la liste dans la carte sont utilisés sans être transmis au serveur, notamment lors d'activations involontaires de la carte, le code transmis lors de la prochaine transaction avec le serveur ne correspondra pas au code non utilisé suivant de la liste du serveur. Le document US 5,627,355 mentionne une méthode pour pallier en partie ce problème, par une comparaison avec une séquence de codes dans la liste du serveur de manière à détecter une perte de la synchronisation et ainsi à rétablir la concordance entre les deux listes. Cette méthode notamment pour des raisons de sécurité ne peut être limitée qu'à une courte séquence. Par conséquent, si plusieurs codes sont gaspillés dans la carte, le système n'acceptera plus les codes fournis par le Client. Ensuite, même si la concordance est régulièrement mise à jour, il a une perte de codes utilisables et donc un moindre nombre de transactions possibles pour une liste donnée enregistrée dans la carte. La carte sera ainsi plus rapidement hors service. Finalement, un autre inconvénient lié à ce problème provient du fait que des activations intempestives ont pour conséquence d'augmenter inutilement la consommation d'énergie électrique stockée dans la carte.

En général, une première activation de l'interrupteur d'une carte du type décrit précédemment est prévu pour initialiser l'application. Ensuite, chaque nouveau cycle est lancé par chaque nouvelle activation de l'interrupteur. Le problème lié aux activations involontaires de l'interrupteur et donc du programme d'identification sécurisée ne concerne pas seulement l'utilisateur de la carte qui, par exemple, la place dans un portemonnaie dans une poche arrière de son pantalon et qui, en s'asseyant, peut parfois activer de manière non intentionnelle l'interrupteur de sa carte, mais également des étapes de production au cours desquelles des pressions sont exercées sur celle-ci, notamment lors de l'apport de couches externes par laminage ou des étapes d'impression. Ainsi, lorsque le client reçoit une nouvelle carte, cette dernière peut avoir déjà consommé un certain nombre de codes d'identification personnels. Si ce nombre est plus élevé que celui toléré par le système gérant l'application, le client reçoit alors une carte défectueuse qui ne fonctionne pas. Une telle situation est évidement néfaste pour le fournisseur de service et engendre des inconvénients pour ses clients.

Le but de la présente invention est de fournir une carte électronique avec un interrupteur actionnable par un utilisateur qui résolve le problème susmentionné.

A cet effet, la présente invention concerne une carte électronique comprenant des moyens pour transmettre un signal à un utilisateur de cette carte électronique, une unité électronique, une source d'énergie électrique, un interrupteur actionnable par l'utilisateur de la carte électronique et une application introduite dans ladite unité électronique, **caractérisée en ce qu'**elle comprend en outre des moyens de détection de l'activation dudit interrupteur agencés pour déterminer si cette activation se termine à l'intérieur d'un premier intervalle temporel dès le début de l'activation, la fin de ce premier intervalle de temps intervenant après la transmission d'un signal perceptible par l'utilisateur de la carte, ou pour déterminer si cette activation de l'interrupteur se termine à l'intérieur d'un deuxième intervalle de temps dès la transmission dudit signal perceptible par l'utilisateur, ladite application étant activée ou son activation validée lorsque lesdits moyens de détection ont détecté la fin de ladite activation de l'interrupteur à l'intérieur dudit premier intervalle ou dudit deuxième intervalle.

On comprendra que l'activation de l'application mentionnée ci-avant peut consister en l'exécution d'une partie terminale du programme associé à l'application, au cours de laquelle notamment le résultat final de l'exécution de cette application est fourni. De même, une activation validée de l'application peut signifier seulement qu'un compteur incrémental, permettant de définir quel est le code OTP suivant à fournir à l'utilisateur, soit incrémenté. Si l'activation n'est pas validée, le compteur incrémental n'est pas incrémenté.

Selon l'invention, au moins un paramètre temporel déterminé du signal d'activation de l'interrupteur par un utilisateur est contrôlé pour autoriser l'exécution de l'application ou d'un cycle de celle-ci ou pour valider dans la carte électronique une telle exécution. Plus particulièrement, il est prévu selon l'invention que la carte fournisse un signal à l'utilisateur suite à une activation de l'interrupteur par ce dernier, ce signal donnant à l'utilisateur une certaine information qui indique explicitement ou implicitement qu'il peut terminer l'activation de l'interrupteur, notamment relâcher la pression exercée sur un bouton-poussoir ou une zone déformable de la carte associés à cet interrupteur. Le cerveau de l'utilisateur qui reçoit ce signal perceptible généré par la carte réagit normalement dans un certain intervalle de temps relativement court.

Le procédé d'activation d'une application donnée via l'activation d'un interrupteur de la carte électronique contrôle que l'activation de l'interrupteur se termine soit dans un premier intervalle de temps dès le début de activation de l'interrupteur à l'intérieur duquel un signal perceptible par l'utilisateur est transmis, soit dans un deuxième intervalle de temps dès la transmission dudit signal perceptible par l'utilisateur. On remarquera que les deux variantes sont équivalentes dans leur principe de fonctionnement puisque le délai pour générer le signal de retour à l'utilisateur qui active l'interrupteur est généralement au moins approximativement déterminé. Si ce délai est déterminé, les deux variantes sont identiques si le premier intervalle a une durée égale à ce délai plus la durée du deuxième intervalle.

On notera que ce procédé d'activation d'une carte électronique peut aussi s'appliquer à l'alimentation d'une certaine partie de l'unité électronique et à l'alimentation de l'affichage de manière à limiter au mieux la consommation d'énergie électrique de la carte. On peut donc prévoir que seul un circuit de veille soit en permanence alimenté, ce circuit étant agencé pour détecter au moins un premier signal d'activation provenant de l'interrupteur. On peut aussi prévoir qu'une activation de l'interrupteur, après que la carte soit entrée dans un mode inactif, active l'alimentation d'une partie ou de la totalité de l'unité électronique qui, dès qu'elle est alimentée, détecte et traite le signal d'activation provenant de l'interrupteur pour déterminer s'il correspond à un signal d'activation de ladite application en fonction d'un signal perceptible par l'utilisateur.

Le signal perceptible par l'utilisateur, généré par la carte électronique pour indiquer à cet utilisateur qu'il peut mettre fin à l'activation de l'interrupteur, peut être constitué par un signal de nature diverse, notamment un signal visuel ou acoustique. Le signal visuel peut être fourni par une diode lumineuse ou par un affichage digital.

Grâce aux caractéristiques de l'invention, on peut ainsi éviter qu'une pression prolongée sur l'interrupteur, notamment lors d'un laminage pendant la fabrication, engendre une activation de l'application en question. Comme le temps de réaction d'un utilisateur typique de la carte est relativement court, il est possible de ne valider que des activations de l'interrupteur qui se terminent dans un court intervalle temporel après l'envoi du signal perceptible par l'utilisateur. Ainsi, au moins la plupart des signaux d'activation non intentionnelle liés à des actions ou comportements typiques d'un utilisateur classique seront écartés. On assure donc que l'application ne soit lancée essentiellement que par une activation volontaire de l'utilisateur de la carte électronique.

Des modes de réalisation de l'invention seront décrits ci-après à l'aide des dessins, donnés à titre d'exemples nullement limitatifs, qui sont annexés à la présente description et dans lesquels :
- La figure 1 montre schématiquement l'architecture d'une carte électronique selon l'invention ;
- La figure 2 montre le profil temporel d'un signal d'activation d'une application intégrée dans la carte électronique selon une première variante envisagée ; et
- La figure 3 montre le profil temporel d'un signal d'activation d'une application intégrée dans la carte électronique selon une deuxième variante envisagée.

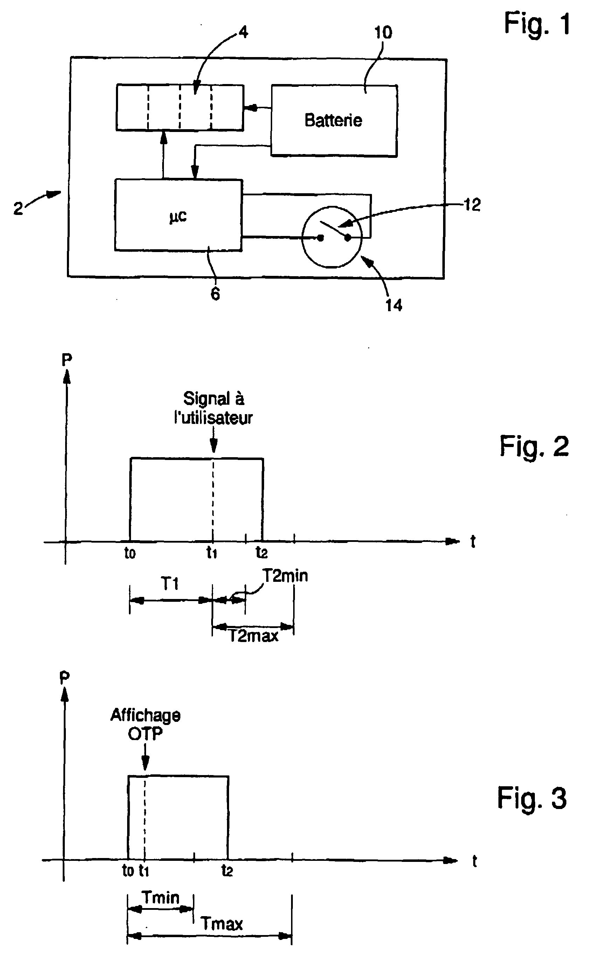

La figure 1 montre une carte électronique 2 comprenant un affichage digital 4, une unité électronique 6, une batterie 10 et un interrupteur 12 actionnable par un utilisateur de la carte électronique. L'interrupteur est intégré dans la carte et associé à une sorte de bouton-poussoir 14 ou à une zone élastiquement déformable de la carte permettant par l'exercice d'une pression dans cette zone déformable ou sur le bouton-poussoir d'activer l'interrupteur. L'activation de l'interrupteur est détectée par des moyens de détection de cette activation associés à des moyens de commande d'une application introduite dans l'unité électronique. Ces moyens de détection et ces moyens de commande peuvent être activés eux-mêmes lors du commencement d'une activation de l'interrupteur, provoquant l'alimentation électrique d'au moins ces moyens de détection. On notera que, dans l'exemple de la figure 1, l'unité électronique 6 est formée par un microprocesseur qui définit les moyens de détection et les moyens de commande susmentionnés. D'autres réalisations avec des circuits électroniques dédicacés respectivement à ces moyens de détection et à ces moyens de commande peuvent être prévues dans le cadre de la présente invention.

En particulier, l'application considérée consiste en un programme d'identification sécurisée d'un utilisateur de la carte en association avec un système relié à un serveur d'un fournisseur de service. Le programme génère ou lit dans une mémoire de la carte des codes d'identification personnels à usage unique (OTP). A chaque lancement de l'application, cette dernière affiche sur l'affichage 4 un nouveau code que l'utilisateur doit alors introduire dans un appareil ou un ordinateur relié à un serveur du fournisseur de service.

Les moyens de détection sont agencés pour détecter activation de l'interrupteur 12, notamment via sa fermeture, et déterminer si cette activation correspond à une impulsion ayant une certaine relation temporelle avec un signal perceptible par l'utilisateur généré par la carte en réponse à l'activation dudit interrupteur. Si tel est le cas, l'application est activée ou son activation validée. En particulier, l'application affiche le code d'identification personnel à utiliser pour une prochaine transaction, ce qui constitue ledit signal perceptible par l'utilisateur. La carte électronique lance l'application (son activation initiale ou l'exécution d'un cycle de cette application ou d'un algorithme d'un programme définissant l'application) dès le début de l'activation de l'interrupteur et affiche ensuite un message ou ledit code pour l'utilisateur. L'activation initiale ou ledit code affiché sont validés seulement si l'impulsion provenant de l'interrupteur (définissant un signal d'activation) se termine à brève échéance après le début de l'affichage d'un message ou d'un code par l'affichage digital 4 de la carte. Dans le cas contraire, les moyens d'affichage sont désactivés rapidement et, le cas échéant, le code affiché est considéré non utilisé (non consommé). Les moyens d'affichage sont de préférence activés simultanément à l'activation de ladite application. Ils restent dans un état actif durant une certaine période permettant à l'utilisateur d'introduire le code affiché dans le système associé à la carte avant d'être à nouveau désactivés.

Selon une première réalisation de l'invention décrite à l'aide de la figure 2, les moyens de détection de l'activation de l'interrupteur 12 et les moyens de commande d'une application programmée dans la carte 2 sont agencés pour déterminer si cette activation de l'interrupteur se termine à l'intérieur d'un intervalle de temps prédéterminé dès la transmission dudit signal perceptible par l'utilisateur (signal à l'utilisateur). L'application est activée ou son activation validée lorsque les moyens de détection ont détecté la fin de ladite activation de l'interrupteur à l'intérieur de cet intervalle de temps prédéterminé. Cette première réalisation est en particulier prévue pour une activation initiale de l'application de la carte électronique, laquelle peut prendre un certain laps de temps. Dans le cadre d'une activation initiale, le signal à l'utilisateur peut être un message ('OK', 'READY','STOP') affiché sur l'affichage digital ou l'affichage d'un premier code personnel à utiliser pour une première transaction. Dans un cas où les opérations internes dans la carte pourraient durer un laps de temps non négligeable, on notera que le signal perceptible par l'utilisateur l'invitant à mettre fin à l'activation de l'interrupteur peut être, dans une variante, la fin d'un message initial ('PRESS', 'KEEP', 'WAIT') affiché pendant que lesdites opérations internes sont effectuées. Lorsque ce message initial prend fin, l'utilisateur comprend qu'il peut alors arrêter d'activer l'interrupteur. Pour que l'activation de l'application soit confirmée, l'utilisateur doit terminer l'activation de l'interrupteur dans un certain intervalle de temps donné.

Une activation de l'interrupteur commence au temps t₀. Après un certain laps de temps T1, un signal perceptible par un utilisateur est donné au temps t₁, Le temps T1 peut être ici de durée variable. Toutefois en pratique, T1 est généralement déterminé par des opérations internes dont la durée est définie par le fonctionnement de la carte électronique. Dès l'affichage dudit signal, un compteur temporel mesure le temps qui s'écoule jusqu'à ce que l'activation de l'interrupteur se termine au temps t₂. Si l'intervalle de temps dépasse une durée maximale T2max, le compteur peut arrêter de mesurer le temps car le signal d'activation reçu n'est pas considéré comme valable, c'est-à-dire donné volontairement par un utilisateur de la carte. Si la fin de l'activation de l'interrupteur n'intervient pas dans le délai T2max, cette activation est considérée non valide par la carte électronique qui n'en tient alors pas compte. Selon une variante de l'invention, il est prévu de valider un signal reçu de l'interrupteur que si l'impulsion correspondante se termine également après un délai minimum T2min. T2min est sélectionné pour être inférieur au temps de réaction typique d'un utilisateur percevant le signal visuel via l'affichage digital.

Selon une autre réalisation de l'invention décrite à l'aide de la figure 3, il est prévu que les moyens de détection de l'activation' de l'interrupteur comptent le temps qui s'écoule dès le début de cette activation. En parallèle l'application est exécutée et rapidement un signal est transmis à l'utilisateur qui doit alors stopper l'activation de l'interrupteur. Cette situation concerne en particulier une nouvelle exécution de l'application pour obtenir un code OTP en vue d'effectuer une nouvelle transaction. Le signal peut être directement l'affichage de ce code OTP ou un autre message précédant l'affichage de ce code. En effet, il peut être préféré de ne pas afficher d'OTP avant d'avoir déterminé si l'activation de l'interrupteur est bien valide. Ainsi l'interrupteur est activé au temps t₀ et le signal de retour pour l'utilisateur l'incitant à terminer l'impulsion d'activation de l'interrupteur est fourni au temps t₁ relativement proche de t₀. Les moyens de détection sont agencés pour déterminer si cette activation se termine à l'intérieur d'un certain intervalle temporel dès le début de l'activation, la fin de cet intervalle de temps intervenant après la transmission d'un signal perceptible par l'utilisateur de la carte. Selon l'invention, l'impulsion d'activation doit se terminer à un temps t₂ correspondant à une durée d'impulsion inférieure à Tmax. A titre d'exemple uniquement, la durée de Tmax peut être une ou deux secondes. Le temps t₁ intervient avant que Tmax soit échu.

Selon une variante de ce mode de réalisation, il est prévu que l'impulsion d'activation ait une longueur supérieure à une durée minimum Tmin, laquelle est cependant supérieure à la durée t₁ - t₀ pour garantir que l'émission du signal perceptible par l'utilisateur soit intervenue avant Tmin.

D'autres variantes peuvent être sélectionnées par l'homme du métier dans le cadre de la présente invention, sans se départir du principe à la base de l'invention.

## Revendications

1. Carte électronique (2) comprenant des moyens (4,6) pour transmettre un signal à un utilisateur de cette carte électronique, une unité électronique (6), une source d'énergie électrique (10), un interrupteur (12) actionnable par l'utilisateur de la carte électronique et une application introduite dans ladite unité électronique, **caractérisée en ce qu'**elle comprend en outre des moyens de détection de l'activation dudit interrupteur agencés pour déterminer si cette activation se termine à l'intérieur d'un premier intervalle temporel (Tmax) dès le début de l'activation (t₀), la fin de ce premier intervalle de temps intervenant après la transmission (t₁) d'un signal perceptible par l'utilisateur de la carte, ou pour déterminer si cette activation de l'interrupteur se termine à l'intérieur d'un deuxième intervalle de temps (T2max) dès la transmission (t₁) dudit signal perceptible par l'utilisateur, ladite application étant activée ou son activation validée lorsque lesdits moyens de détection ont détecté la fin (t₂) de ladite activation de l'interrupteur à l'intérieur dudit premier intervalle ou dudit deuxième intervalle.

2. Carte électronique selon la revendication 1, **caractérisée en ce que** ledit interrupteur est associé à un bouton-poussoir ou à une zone élastiquement déformable (14) de la carte électronique.

3. Carte électronique selon la revendication 1 ou 2, **caractérisée en ce que** ladite application est un programme d'identification personnelle sécurisée utilisant des codes d'identification personnels à usage unique (OTP).

4. Carte électronique selon l'une des revendications 1 à 3, **caractérisée en ce que** ledit signal perceptible par un utilisateur correspond au début de l'affichage d'un message ou à la fin de l'affichage d'un tel message.

5. Carte électronique selon l'une des revendications 1 à 3, **caractérisée en ce que** ledit signal perceptible par un utilisateur correspond à l'affichage d'un code d'identification personnel à usage unique (OTP).

6. Carte électronique selon l'une des revendications précédentes, **caractérisée en ce que** lesdits moyens de détection de l'activation dudit interrupteur sont en outre agencés pour déterminer si cette activation se termine après un laps de temps minimum (Tmin, T2min) dès le début de l'activation (t₀) ou dès la transmission dudit signal perceptible par l'utilisateur, la fin de ce laps de temps minimum intervenant après la transmission (t₁) d'un signal perceptible par l'utilisateur de la carte, ladite application étant activée ou son activation validée lorsque lesdits moyens de détection ont en outre détecté la fin de ladite activation (t₂) de l'interrupteur après ledit laps de temps minimum.

## Claims

1. Electronic card (2) including means (4, 6) for transmitting a signal to a user of said electronic card, an electronic unit (6), an electric; energy source (10), a switch (12) that can be actuated by a user of the electronic card and an application introduced into said electronic unit, **characterized in that** it further includes means for detesting actuation of said switch, arranged for determining whether said actuation ends within a first time interval (Tmax) from the start of actuation (t₀), the end of said first time interval occurring after transmission (t₁) of a signal perceptible to the card user, or for determining whether said switch actuation ends within a second time interval (T2max) from the start of transmission (t₁) of said user perceptible signal, said application being actuated or the actuation thereof validated when said detection means have detected the end (t₂) of said switch actuation within said first interval or said second interval.

2. Electronic card according to claim 1, **characterized in that** said switch is associated with a push-button or with an elastically deformable zone (14) of the electronic card.

3. Electronic card according to claim 1 or 2, **characterized in that** said application is secured personal identification program using one time passwords (OTP), which are displayed by said digital display.

4. Electronic card according to any of claims 1 to 3, **characterized in that** said user perceptible signal corresponds to the start of the display of a message or to the end of the display of said message.

5. Electronic card according to any of claims 1 to 3, **characterized in that** said user perceptible signal corresponds to the display of a one-time personal password (OTP).

6. Electronic card according to any of the preceding claims, **characterized in that** said switch actuation detection means are further arranged for determining whether said actuation sends after a minimum time period (Tmin, Trmin), from the start of actuation (t₀) or from the start of transmission of said user perceptible signal, the end of this minimum time period occurring after transmission (t₁) of a signal perceptible to the card user, said application being actuated or the actuation thereof being validated when said detection means have also detected the end of said switch actuation (t₂) after said minimum time period.

## Patentansprüche

1. Elektronische Karte (2) umfassend Mittel (4, 6) zum Übermitteln eines Signals an einen Benutzter der elektronischen Karte, eine elektronische Einheit (6), eine elektrische Energiequelle (10), einen Schalter (12), welcher durch den Anwender der elektronischen Karte betätigbar ist und mit einer in die elektronische Einheit eingefügten Anwendung, **dadurch gekennzeichnet, dass** sie unter anderem Mittel zur Detektion der Betätigung des Schalters aufweist, die zur Bestimmung eingerichtet sind, ob die Betätigung innerhalb eines ersten Zeitintervalls (Tmax) vom Beginn einer Betätigung (t₀) an endet, ob das Ende des ersten Zeitintervalls nach einer Übermittlung (t₁) eines vom Anwender der Karte wahrnehmbaren Signals eintritt oder um zu bestimmen, ob die Betätigung des Schalters innerhalb eines zweiten Zeitintervalls (T2max) beginnend von der Übermittlung (t₁) des vom Anwender wahrnehmbaren Signals beendet ist, wobei die Anwendung aktiviert oder die Aktivierung validiert wird, wenn die Detektionsmittel das Ende (t₂) der Betätigung des Schalters innerhalb des ersten Zeitintervalls oder des zweiten Zeitintervall detektiert haben.

2. Elektronische Karte nach Anspruch 1, **dadurch gekennzeichnet, dass** der Schalter mit einem Druckknopf oder mit einer elastisch deformierbaren Zone (14) der elektronischen Karte gekoppelt ist.

3. Elektronische Karte nach Anspruch 1 oder 2, **dadurch gekennzeichnet, dass** die Anwendung ein persönliches Sicherheitsidentifikationsprogramm ist, welches einmal verwendbare persönliche Identifikationscodes (OTP) verwendet.

4. Elektronische Karte nach einem der Ansprüche 1 bis 3, **dadurch gekennzeichnet, dass** das vom Anwender wahrnehmbare Signal mit dem Beginn des Versenden einer Nachricht oder mit dem Ende des Versendens der Nachricht korrespondierk.

5. Elektronische Karte nach einem der Ansprüche 1 bis 3, **dadurch gekennzeichnet, dass** das vom Anwender wahrnehmbare Signal mit dem Versenden eines einmal verwendbaren persönlichen Identifikationscodes (OTP) korrespondiert.

6. Elektronische Karte nach einem der vorhergehenden Absprüche, **dadurch gekennzeichnet, dass** die Detektionsmittel der Aktivierung des Schalters unter anderem zur Bestimmung dessen ausgebildet sind, ob die Aktivierung nach einer minimalen Zeitspanne (Tmin, T2rnin) ausgehend vom Beginn der Betätigung (t₀) oder dem Versenden des vom Anwender wahrnehmbaren Signals endet, wobei das Ende der minimalen Zeitspanne nach dem Versenden (t₁) des vom Anwender der Karte wahrnehmbaren Signals eintritt, wobei die Anwendung aktiviert oder die Aktivierung validiert wird, wenn die Detektionsmittel unter anderem das Ende der Betätigung (t₂) des Schalters nach der minimalen Zeitspanne detektieren.
